# EUROPÄISCHE PATENTANMELDUNG

(11) **EP 1 022 754 A2**
(43) Veröffentlichungstag der Anmeldung: **26.07.2000**
(21) Anmeldenummer: 00100614.7
(22) Anmeldetag: 13.01.2000
(51) Int. Cl.: H01H 9/18

(54) **Schaltermodul**

(30) Priorität: 23.01.1999 DE 19902604
(71) Anmelder: Mannesmann VDO Aktiengesellschaft, 60388 Frankfurt am Main (DE)
(72) Erfinder: Dörrie, Christian, Dipl.-Ing. (FH), 78050 Villingen-Schwenningen (DE)

(57) **Zusammenfassung**

Es wird vorgeschlagen, ein Schaltermodul, das aus mehreren Schaltern oder Tastern (2a bis 2g) besteht, die in einem einzigen Gehäuse (1) angeordnet sind, wobei die Schalter oder Taster (2a bis 2g) der Betätigung von in einem Fahrzeug angeordneten elektrischen Verbrauchern oder Steuergeräten dienen, darin zu verbessern, daß in Zuordnung zu den Schaltern oder Tastern (2a bis 2g) ein Display (3) vorgesehen ist, auf dem frei programmierbar eine Symbolik zur Anzeige gebracht werden kann, die die Zuordnung jedes Schalters oder Tasters (2a bis 2g) zu einem bestimmten Verbraucher erkennen läßt.

## Beschreibung

Die Erfindung betrifft ein Schaltermodul gemäß dem Oberbegriff des ersten Anspruchs. Sie geht aus von einer Vorrichtung zum Bedienen von Einrichtungen in einem Fahrzeug, wie sie die Anmelderin in der bisher unveröffentlichten Anmeldung DE 198 40 142.6 beschrieben hat. Bei der dort beschriebenen Vorrichtung erfolgt die Kennzeichnung der Schalter oder Taster durch Beschriftung des Gehäuses mittels eines Lasers oder durch das Einbringen entsprechend beschrifteter Einlegeplättchen in die Frontseite des Gehäuses. Eine solche Kennzeichnung der Schalter oder Taster ist aber fertigungstechnisch aufwendig und erzeugt eine große Zahl von Varianten, da derart gekennzeichnete Vorrichtungen kundenspezifisch angefertigt werden müssen. Damit geht eine teure Lagerhaltung und eine die Kundenwünsche berücksichtigende Disposition einher.

Die Aufgabe der vorliegenden Erfindung besteht darin, von einem gattungsgemäßen Schaltermodul einen Grundtyp zu schaffen, bei dem die kundenspezifische Kennzeichnung seiner Schalter oder Taster ohne mechanische oder drucktechnische Bearbeitungsschritte erfolgt.

Die Aufgabe wird durch die Merkmale des ersten Patentanspruchs gelöst. Die abhängigen Ansprüche betreffen vorteilhafte Ausgestaltungen der gefundenen Lösung.

Die gefundene Lösung zeichnet sich dadurch aus, daß in Zuordnung zu den Schaltern oder Tastern ein Display vorgesehen ist, auf dem frei programmierbar eine Symbolik zur Anzeige gebracht werden kann, die die Zuordnung jedes Schalters oder Tasters zu einem bestimmten Verbraucher erkennen läßt.

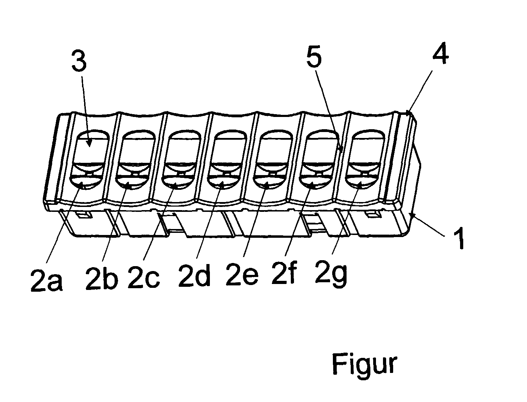

Die einzige beigefügte **Figur** verdeutlicht die vorgeschlagene Lösung. Sie zeigt in einer perspektivischen Darstellung, daß in einem das Schaltermodul bildenden Gehäuse 1 mehrere Schalter oder Taster 2a bis 2g angeordnet sind. In Zuordnung zu den Schaltern oder Tastern 2a bis 2g ist ein Display 3 vorgesehen, auf dem frei programmierbar eine Symbolik zur Anzeige gebracht werden kann, die die Zuordnung jedes Schalters oder Tasters 2a bis 2g zu einem bestimmten Verbraucher erkennen läßt. Das Display 3 kann vorzugsweise als ein LC-Matrix-Display (LC = liquid cristal) ausgeführt sein. Aber auch jede andere geeignete Technologie und Bauform kann gewählt werden, solange die Darstellung auf dem Display 3 frei programmierbar ist. Entweder wird man im Gehäuse 1 ein einstückig ausgebildetes, über die gesamte Schalter- bzw. Tastenreihe führendes Display 3 wählen, das durch im Gehäusedeckel 4 angeformte Stege 5 in so viele Felder unterteilt ist, wie Schalter bzw. Taster 2a bis 2g vorgesehen sind, wobei in jedem Displayfeld ein Piktogramm oder eine andere geeignete Symbolik dargestellt werden kann. Oder man wird bei entsprechend großzügiger Gestaltung des Schaltermoduls mehrere Einzeldisplays zum Einsatz bringen. Die Entscheidung zugunsten der einen oder anderen Displayvariante wird entsprechend den konstruktiven Gegebenheiten nach wirtschaftlichen Gesichtspunkten zu fällen sein. In der Figur ist die erste Variante mit dem einstückigen Display dargestellt. Die Ansteuerung des Displays 3 erfolgt durch eine elektronische Steuerschaltung, die entweder im Schaltermodul oder in einer mit dem Schaltermodul verbundenen Schaltungsanordnung angeordnet ist. Die Ansteuerung des Displays ist frei programmierbar, so daß auf dem Display beliebige Piktogramme oder Symboldarstellungen zur Anzeige gebracht werden können. Auch Chip-on-glas-Techniken können bei der Displayansteuerung zum Einsatz kommen, bei der die auf dem Display gewünschte Darstellung unmittelbar am Display erzeugt wird und nicht in einer vom Schaltermodul räumlich getrennten Schaltungsanordnung. Insgesamt wird durch den Einsatz einer frei programmierbaren Anzeige eine flexible Verwendung des Schaltermoduls ermöglicht. Änderungen in der Schalter- bzw. Tastenbelegung sind programmtechnisch einfach ausführbar und rufen am Schaltermodul keine konstruktiven oder drucktechnischen Veränderungen hervor.

## Patentansprüche

1. Schaltermodul, bestehend aus mehreren Schaltern oder Tastern (2a bis 2g), die in einem einzigen Gehäuse (1) angeordnet sind, wobei die Schalter oder Taster (2a bis 2g) der Betätigung von in einem Fahrzeug angeordneten elektrischen Verbrauchern oder Steuergeräten dienen,
**dadurch gekennzeichnet**, daß in Zuordnung zu den Schaltern oder Tastern (2a bis 2g) ein Display (3) vorgesehen ist, auf dem frei programmierbar eine Symbolik zur Anzeige gebracht werden kann, die die Zuordnung jedes Schalters oder Tasters (2a bis 2g) zu einem bestimmten Verbraucher erkennen läßt.

2. Schaltermodul nach Anspruch 1, **dadurch gekennzeichnet**, daß im Gehäuse (1) ein über die gesamte Schalter- bzw. Tastenreihe führendes Display (3) vorgesehen ist, das durch im Gehäusedeckel (4) angeformte Stege (5) in so viele Felder unterteilt ist, wie Schalter bzw. Taster (2a bis 2g) vorgesehen sind.

3. Schaltermodul nach Anspruch 1, **dadurch gekennzeichnet**, daß mehrere einzelne Displays (3) vorgesehen sind, auf denen frei programmierbar eine Symbolik zur Anzeige gebracht werden kann, die die Zuordnung jedes Schalters oder Tasters (2a bis 2g) zu einem bestimmten Verbraucher erkennen lassen.

4. Schaltermodul nach einem der vorangegangenen Ansprüche, **dadurch gekennzeichnet**, daß die Ansteuerung des oder der Displays (3) durch eine elektronische Steuerschaltung erfolgt, die entweder im Schaltermodul oder in einer mit dem Schaltermodul verbundenen Schaltungsanordnung angeordnet ist.

5. Schaltermodul nach einem der vorangegangenen Ansprüche, **dadurch gekennzeichnet**, daß die Ansteuerung des oder der Displays (3) durch Einsatz der Chip-on-glas-Technik erfolgt, bei der die Erzeugung der auf dem Display (3) darzustellenden Symbolik unmittelbar am Display vorgenommen wird.
